Europäisches Patentamt

(19) European Patent Office

Office européen des brevets

(11) Publication number : **0 350 224 B1**

(12) **EUROPEAN PATENT SPECIFICATION**

(45) Date of publication of patent specification :
30.06.93 Bulletin 93/26

(51) Int. Cl.⁵ : **C08L 67/02,** // **(C08L67/02, 31:04)**

(21) Application number : **89306696.9**

(22) Date of filing : **30.06.89**

(54) Polybutylenene terephthalate resin composition and molded article thereof.

(30) Priority : **05.07.88 JP 167161/88**

(43) Date of publication of application :
**10.01.90 Bulletin 90/02**

(45) Publication of the grant of the patent :
**30.06.93 Bulletin 93/26**

(84) Designated Contracting States :
**AT BE CH DE ES FR GB GR IT LI LU NL SE**

(56) References cited :
**EP-A- 0 019 438**
**US-A- 4 284 550**

(73) Proprietor : **POLYPLASTICS CO. LTD.**
**3-13, Azuchicho, 2-chome**
**Chuo-Ku Osaka-shi Osaka 541 (JP)**

(72) Inventor : **Fukasawa, Jun**
**324-113 Miyashita**
**Fuji-shi Shizuoka (JP)**
Inventor : **Aoshima, Hironobu**
**169-62, Kitamatsuno Fujikawamachi**
**Ihara-gun Shizuoka (JP)**

(74) Representative : **Jackson, Peter et al**
**HYDE, HEIDE & O'DONNELL 10-12 Priests**
**Bridge**
**London SW15 5JE (GB)**

## Description

The present invention relates to a polybutylene terephthalate resin composition. Particularly, it relates to a polybutylene terephthalate resin composition which is excellent in heat shrinkage resistance and gas barrier properties and therefore is useful as a packaging material for foods.

A molded article of the composition according to the present invention is excellent in resistance to heat shrinkage and solvents and in gas barrier properties and is tasteless and odorless. Therefore, it is very useful as a packaging material, particularly, as a food container.

Up to this time, various polymers have been used as food packaging materials, such as for a bottle or a bag.

Particularly, a polybutylene terephthalate resin is an excellent packaging material for foods, because it is excellent in resistance to heat and solvents is tasteless and odorless and therefore inflicts no damage to the taste and odor of food when it comes into contact with food and is also suitable for a packaging material in respect of processability and mechanical strength. However, a polybutylene terephthalate resin does not always exhibit sufficient barrier properties against oxygen or carbon dioxide gas, though it is superior to other polyolefins in gas barrier properties.

(Summary of the Invention)

The inventors of the present invention have eagerly studied to further improve the gas barrier properties of a polybutylene terephthalate resin without damaging its excellent properties and have found that an objective composition can be obtained by blending a specified olefin-vinyl alcohol copolymer with a polybutylene terephthalate resin. The present invention has been accomplished on the basis of this finding.

Namely, the present invention provides a polybutylene terephthalate resin composition comprising 50 to 95% by weight of a polybutylene terephthalate resin and 5 to 50% by weight of an olefin-vinyl alcohol copolymer wherein the olefin-vinyl alcohol copolymer has an olefin content of 25 to 45 molar percent and a molded article thereof, such as a film, sheet or container.

The polybutylene terephthalate according to the present invention is a polyester comprising butylene terephthalate units as the major repeating units. More precisely, it is a polyester prepared by the condensation of 1,4-butanediol with terephthalic acid or a lower alcohol ester thereof. Alternatively, it may be a copolyester mainly comprising butylene terephthalate units.

The intrinsic viscosity of the polybutylene terephthalate resin is preferably about 0.5 to 2.0 from the standpoint of mechanical strength, though it is not particularly limited.

The olefin-vinyl alcohol copolymer to be used in the present invention is a copolymer prepared by the saponification of a copolymer comprising an olefin having 2 to 6 carbon atoms and a vinyl ester such as vinyl acetate.

The olefin content of the copolymer is 25 to 45 molar %, while a preferred example of the olefin is ethylene.

The higher the degree of saponification of the vinyl-ester such as vinyl acetate, the more excellent the gas barrier properties. Therefore, the degree of saponification is preferably 90% or above, still preferably 95% or above.

According to the present invention, an olefin-vinyl alcohol copolymer is blended in an amount of 5 to 50% by weight. If the amount is less than 5% by weight, the gas barrier properties will be hardly improved, while if it exceeds 50% by weight, the resulting composition will be poor in moldability, heat resistance and mechanical strengths.

The composition of the present invention exhibits a high rate of crystallization, so that it can be processed into a film, sheet, container, other vacuum formings or blow molded articles by various ordinary methods. The processing of the composition into a film by inflation is superior to the one by T-die extrusion, because the gas barrier properties of a film is further improved by orientation.

Up to this time, the blending of other thermoplastic resin with a polyethylene terephthalate resin has been attempted for the purpose of improving the properties thereof. However, in order to apply the composition thus obtained to heat-resistant uses, it must be subjected to stretching and heat setting owing to its low rate of crystallization, which means that the processing of the composition must be carried out by restricted and complicated means such as biaxial stretching or stretch blowing. Further, a non-oriented polyethylene terephthalate composition exhibits significant heat shrinkage to cause facile deformation under heating.

Meanwhile, a molded article of the composition according to the present invention exhibits reduced heat shrinkage at high temperature and is remarkably excellent in heat resistance.

The composition of the present invention may suitably contain conventional additives which are generally added to thermoplastic or thermosetting resins depending upon the required performance, as far as they are not adverse to the object of the use according to the present invention. Examples of the additives include plasticizer, stabilizer such as antioxidant and ultraviolet absorber, antistatic agent, surfactant, flame-retardant, auxiliary flame-retardant, colorant such as dye and pigment, lubricant for improving the flowability and crystallization accelerator (nucleating agent). Further, the composition of the present invention may contain other thermoplastic resin or an inorganic filler as an auxiliary component depending upon the object in such a range as not to damage the effect of the present invention.

[Example]

The present invention will now be described in more detail by referring to the following Examples, though it is not limited to them.

Examples 1 to 4

A polybutylene terephthalate resin (PBT) and an ethylene-vinyl alcohol copolymer (EVOH ; ethylene content : 32 molar %, degree of saponification : 98% or above) were preliminarily dried sufficiently and mixed with each other in a ratio given in Table 1. The obtained mixture was pelletized with an extruder at a resin temperature of 240°C and extruded through a T-die to obtain a non-oriented T-die film having a thickness of 30 μm. This film was examined for oxygen permeability and heat shrinkage. The results are shown in Table 1.

The oxygen permeability and heat shrinkage were determined by the following methods:

(1) Method of measurement of oxygen permeability

The oxygen permeability was determined at 23°C according to ASTM-D 1434-82 by the use of a GTR tester mfd. by Toyo Seiki.

(2) Method of measurement of heat shrinkage

A sample of 20 x 150 mm (distance between two gage marks : 100 mm) was heated in a dryer fitted with an air fan at 170°C for 30 minutes and taken out thereof to determine the degree of shrinkage between gages.

Comparative Examples 1 to 2

For comparison, PBT alone and a composition which is the same as the one of Example 2 except that a polyethylene terephthalate resin (PET) was used instead of the PBT were evaluated in a similar manner to the one described above. The results are shown in Table 1.

Table 1

| | | Example | | | | Comparative Example | |
|---|---|---|---|---|---|---|---|
| | | 1 | 2 | 3 | 4 | 1 | 2 |
| Composition (% by weight) | PBT | 85 | 80 | 70 | 60 | 100 | – |
| | PET | – | – | – | – | – | 80 |
| | EVOH | 15 | 20 | 30 | 40 | – | 20 |
| $O_2$ gas permeability $(cc/m^2 \cdot 24\ hr \cdot atm)$ | | 100 | 90 | 65 | 15 | 120 | 90 |
| Heat shrinkage (%) | | 0 | 0 | 0 | 0 | +0.5 | –10 |

Examples 5 to 8

A polybutylene terephthalate resin (PBT) and an ethylene-vinyl alcohol copolymer (EVOH; ethylene content : 32 molar %, degree of saponification : 98% or above) were preliminarily dried sufficiently and mixed with each other in a ratio given in Table 2. The obtained mixture was pelletized with an extruder at a resin temperature of 240°C and extruded through an inflation die to obtain a non-oriented inflation film having a thickness of 30 μm. This film was examined for oxygen permeability and heat shrinkage. The results are shown in Table 2.

Comparative Examples 3 to 4

For comparison, PBT alone and a composition which is the same as the one of Example 6 except that a polyethylene terephthalate resin (PET) was used instead of the PBT were evaluated in a similar manner to the one described above. The results are shown in Table 2.

Table 2

| | | Example | | | | Comparative Example | |
|---|---|---|---|---|---|---|---|
| | | 5 | 6 | 7 | 8 | 3 | 4 |
| Composition (% by weight) | PBT | 85 | 80 | 70 | 60 | 100 | – |
| | PET | – | – | – | – | – | 80 |
| | EVOH | 15 | 20 | 30 | 40 | – | 20 |
| $O_2$ gas permeability $(cc/m^2 \cdot 24hr \cdot atm)$ | | 80 | 70 | 40 | 5 | 100 | 70 |
| Heat shrinkage (%) | | 0 | 0 | 0 | 0 | +0.3 | –10 |

Examples 9 to 12 and Comparative Example 5

The T-die films prepared in Examples 1 to 4 and Comparative Example 1 were biaxially oriented both in a direction of injection and in a direction perpendicular thereto simultaneously under heating at 190°C and heat-set at 200°C for 10 seconds to obtain a biaxially oriented film. The draw ratio was about 2. The resulting film was examined for oxygen permeability and the results are shown in Table 3.

EP 0 350 224 B1

Table 3

| | | Example | | | | Comparative Example |
|---|---|---|---|---|---|---|
| | | 9 | 10 | 11 | 12 | 5 |
| Composition (% by weight) | PBT | 85 | 80 | 70 | 60 | 100 |
| | EVOH | 15 | 20 | 30 | 40 | - |
| $O_2$ gas permeability $(cc/m^2 \cdot 24hr \cdot atm)$ | | 60 | 55 | 45 | 10 | 80 |

## Claims

1. A polybutylene terephthalate resin composition comprising 50 to 95% by weight of a polybutylene terephthalate resin and 5 to 50% by weight of an olefin-vinyl alcohol copolymer wherein the olefin-vinyl alcohol copolymer has an olefin content of 25 to 45 molar percent.

2. A polybutylene terephthalate resin composition as set forth in claim 1, wherein the polybutylene terephthalate resin has an intrinsic viscosity of 0.5 to 2.0.

3. A polybutylene terephthalate resin composition as set forth in claim 1 or claim 2, wherein the olefin-vinyl alcohol copolymer is a copolymer prepared by the saponification of a copolymer comprising an olefin having 2 to 6 carbon atoms and a vinyl ester.

4. A polybutylene terephthalate resin composition as set forth in claim 3, wherein the olefin is ethylene.

5. A polybutylene terephthalate resin composition as set forth in claim 3 or claim 4, wherein the vinyl ester is vinyl acetate.

6. A polybutylene terephthalate resin composition as set forth in any preceding claim, wherein the olefin-vinyl alcohol copolymer has a degree of saponification of the vinyl component of 90% or above.

7. A polybutylene terephthalate resin composition as set forth in claim 6, wherein the olefin-vinyl alcohol copolymer has a degree of saponification of the vinyl component of 95% or above.

8. A film, sheet or container prepared by molding a polybutylene terephthalate resin composition as set forth in any preceding claim.

## Patentansprüche

1. Polybutylenterephthalat-Harz-Zusammensetzung, umfassend 50 bis 95 Gew.-% eines Polybutylenterephthalat-Harzes und 5 bis 50 Gew.-% eines Olefin-Vinylalkohol-Copolymers, worin das Olefin-Vinylalkohol-Copolymer einen Olefin-Gehalt von 25 bis 45 Mol-% hat.

2. Polybutylenterephthalat-Harz-Zusammensetzung nach Anspruch 1, worin das Polybutylenterephthalat-Harz eine Grenzviskosität von 0,5 bis 2,0 hat.

3. Polybutylenterephthalat-Harz-Zusammensetzung nach Anspruch 1 oder Anspruch 2, worin das Olefin-Vinylalkohol-Copolymer ein Copolymer ist, das durch Verseifung eines ein Olefin mit 2 bis 6 Kohlenstoff-Atomen und einen Vinylester umfassenden Copolymers hergestellt worden ist.

5

**4.** Polybutylenterephthalat-Harz-Zusammensetzung nach Anspruch 3, worin das Olefin Ethylen ist.

**5.** Polybutylenterephthalat-Harz-Zusammensetzung nach Anspruch 3 oder Anspruch 4, worin der Vinylester Vinylacetat ist.

**6.** Polybutylenterephthalat-Harz-Zusammensetzung nach irgendeinem vorhergehenden Anspruch, worin das Olefin-Vinylalkohol-Copolymer einen Verseifungsgrad der Vinyl-Komponente von 90 % oder darüber hat.

**7.** Polybutylenterephthalat-Harz-Zusammensetzung nach Anspruch 6, worin das Olefin-Vinylalkohol-Copolymer einen Verseifungsgrad der Vinyl-Komponente von 95 % oder darüber hat.

**8.** Film, Folie oder Behälter, hergestellt durch Preßformen einer Polybutylenterephthalat-Harz-Zusammensetzung nach irgendeinem vorhergehenden Anspruch.

## Revendications

**1.** Une composition de résine de polytéréphtalate de butylène comprenant 50 à 95 % en poids d'une résine de polytéréphtalate de butylène et 5 à 50 % en poids d'un copolymère oléfine-alcool vinylique, dans laquelle la teneur en oléfine du copolymère oléfine-alcool vinylique est de 25 à 45 moles pour cent.

**2.** Une composition de résine de polytéréphtalate de butylène telle que spécifiée dans la revendication 1, dans laquelle la résine de polytéréphtalate de butylène a une viscosité intrinsèque de 0,5 à 2,0.

**3.** Une composition de résine de polytéréphtalate de butylène telle que spécifiée dans la revendication 1 ou la revendication 2, dans laquelle le copolymère oléfine-alcool vinylique est un copolymère préparé par la saponification d'un copolymère comprenant une oléfine ayant 2 à 6 atomes de carbone et un ester de vinyle.

**4.** Une composition de résine de polytéréphtalate de butylène telle que spécifiée dans la revendication 3, dans laquelle l'oléfine est l'éthylène.

**5.** Une composition de résine de polytéréphtalate de butylène telle que spécifiée dans la revendication 3 ou la revendication 4, dans laquelle l'ester de vinyle est l'acétate de vinyle.

**6.** Une composition de résine de polytéréphtalate de butylène telle que spécifiée dans l'une quelconque des revendications précédentes, dans laquelle le degré de saponification du composant vinylique du copolymère oléfine-alcool vinylique est de 90 % ou plus.

**7.** Une composition de résine de polytéréphtalate de butylène telle que spécifiée dans la revendication 6, dans laquelle le degré de saponification du composant vinylique du copolymère oléfine-alcool vinylique est de 95 % ou plus.

**8.** Une pellicule, une feuille ou un récipient préparé par moulage d'une composition de résine de polytéréphtalate de butylène telle que spécifiée dans l'une quelconque des revendications précédentes.